Europäisches Patentamt

European Patent Office

Office européen des brevets

(19)

(11) EP 0 780 433 B1

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.$^6$: **C08L 51/00**, C08K 5/34, C08K 3/32

(21) Anmeldenummer: **96119509.6**

(22) Anmeldetag: **05.12.1996**

(54) **Flammgeschützte thermoplastische kautschukhaltige Formmassen**

Fire-resistant thermoplastic moulding masses containing a rubber

Masses de moulage ignifugées, thermoplastiques et contenant un caoutchouc

(84) Benannte Vertragsstaaten:
**BE DE ES FR GB IT**

(30) Priorität: **18.12.1995 DE 19547078**

(43) Veröffentlichungstag der Anmeldung:
**25.06.1997 Patentblatt 1997/26**

(73) Patentinhaber: **BAYER AG**
**51368 Leverkusen (DE)**

(72) Erfinder:
- **Eichenauer, Herbert, Dr.**
  **41539 Dormagen (DE)**
- **Fuhr, Karl, Dr.**
  **47803 Krefeld (DE)**
- **Willenberg, Bernd, Dr.**
  **51469 Bergisch Gladbach (DE)**
- **Alberts, Heinrich, Dr.**
  **51519 Odenthal (DE)**

(56) Entgegenhaltungen:
EP-A- 0 311 909       EP-A- 0 326 082
EP-A- 0 391 336       EP-A- 0 400 600
EP-A- 0 422 733       EP-A- 0 465 927
EP-A- 0 534 238       EP-A- 0 558 266
WO-A-95/16736         US-A- 4 618 633
US-A- 5 276 256

- PATENT ABSTRACTS OF JAPAN vol. 008, no. 218 (C-245), 4.Oktober 1984 & JP 59 102966 A (NIPPON CARBIDE KOGYO KK), 14.Juni 1984,

**Beschreibung**

Flammgeschützte Kunststoffe werden zunehmend eingesetzt, z.B. für Gehäuse von Elektro- und Elektronikgeräten, Teile für Elektroinstallationen (Steckdosen, Schaltergehäuse) und Teile für Elektroheizungen.
Da bei der Verwendung halogenhaltiger Additive im Brandfall korrosiv wirkende Verbrennungsgase gebildet werden, besteht ein Bedarf an schwer entflammbaren halogenfreien Kunststoffen.
Die vorliegende Erfindung betrifft thermoplastische, schwer entflammbare halogenfreie Formmassen auf Basis kautschukmodifizierter Styrolpolymerisate mit guten Zähigkeits- und Härtewerten.
Thermoplastische Formmassen auf Basis kautschukmodifizierter Styrolpolymerisate mit halogenfreier Flammschutzausrüstung sind bekannt und z.B. in EP-PS 311 909, EP-PS 465 927 und DE-OS 39 20 995 sowie der dort zitierten Literatur beschrieben.
Im allgemeinen enthalten die Formmassen als Mittel zur Erzielung einer Flammfestausrüstung Zusätze aus der Gruppe der niedermolekularen stickstoffhaltigen oder phosphorhaltigen Verbindungen oder spezielle Polymerkomponenten (z.B. Tetrafluorethylen-Polymerisate oder Polyphenylenether) in relativ hohen Mengenanteilen. Da derartige Verbindungen in der Regel eine Weichmacherwirkung zeigen oder zu Unverträglichkeitsphänomenen führen, gelingt es damit nicht, halogenfreie flammfest ausgerüstete Formmassen mit guten Zähigkeits- und Härtewerten herzustellen.
Aufgabe der vorliegenden Erfindung ist es, solche Formmassen auf Basis polymerer Bestandteile ohne Einbußen bei Zähigkeit und Härte bereitzustellen.
Unter flammfest ausgerüsteten Formmassen sind dabei solche Produkte zu verstehen, die nach der Underwriter Laboratories UL-94-Brandtest-Klassifizierung die Einstufungen V0 und V1 erreichen.
Erfindungsgemäße Formmassen, die die oben beschriebenen Anforderungen erfüllen, bestehen aus

A) 20 bis 100 Gew.-Teilen, bevorzugt 25 bis 90 Gew.-Teilen und besonders bevorzugt 30 bis 80 Gew.-Teilen, eines oder mehrerer halogenfreier Pfropfkautschukpolymerer aus

a) 1 bis 50 Gew.-%, vorzugsweise 5 bis 40 Gew.-%, eines Kautschuks, in dessen Gegenwart ein Gemisch aus

b) 5 bis 80 Gew.-%, 10 bis 70 Gew.-%, Styrol und/oder einem Styrolderivat,

c) 5 bis 40 Gew.-%, vorzugsweise 10 bis 30 Gew.-%, mindestens eines Monomeren ausgewählt aus Acrylnitril, Methacrylnitril, Methylmethacrylat, Maleinsäureanhydrid, N-Phenylmaleinimid,

d) 5 bis 30 Gew.-%, vorzugsweise 10 bis 25 Gew.-%, Hydroxyethylmethacrylat und/oder Hydroxypropylmethacrylat polymerisiert wurde,

B) 0 bis 70 Gew.-Teilen, bevorzugt 15 bis 60 Gew.-Teilen und besonders bevorzugt 20 bis 50 Gew.-Teilen, eines oder mehrerer halogenfreier thermoplastischer Ter- oder Multipolymerisate aus

e) 10 bis 90 Gew.-%, vorzugsweise 20 bis 80 Gew.-%, Styrol und/oder einem Styrolderivat,

f) 5 bis 50 Gew.-%, vorzugsweise 10 bis 40 Gew.-% mindestens eines Monomeren ausgewählt aus Acrylnitril, Methacrylnitril, Methylmethacrylat, Maleinsäureanhydrid, N-Phenylmaleinimid,

g) 5 bis 40 Gew.-%, vorzugsweise 10 bis 35 Gew.-%, Hydroxyethylmethacrylat und/oder Hydroxypropylmethacrylat,

C) 5 bis 50 Gew.-Teilen, bevorzugt 10 bis 40 Gew.-Teilen und besonders bevorzugt 15 bis 30 Gew.-Teilen, Ammoniumpolyphosphat,

D) 1 bis zu 20 Gew.-Teilen, bevorzugt 2 bis 15 Gew.-Teilen und besonders bevorzugt 5 bis 12,5 Gew.-Teilen, mindestens einer heterocyclischen stickstoffhaltigen Verbindung mit mindestens zwei Stickstoffatomen im Heterocyclus und gegebenenfalls

E) bis zu 50 Gew.-Teilen, bevorzugt bis zu 40 Gew.-Teilen und besonders bevorzugt bis zu 30 Gew.-Teilen, mindestens einer weiteren hydroxylgruppenfreien Polymerkomponente.

Halogenfreie Pfropfkautschukpolymere A) im Sinne der Erfindung sind Polymerisate, die durch radikalische Polymerisation von Monomerkombinationen aus mindestens einem Styrolderivat, mindestens einem weiteren Monomeren ausgewählt aus Acrylnitril, Methacrylnitril, Methylmethacrylat, Maleinsäureanhydrid, oder N-Phenylmaleinimid sowie mindestens einem Hydroxylgruppen-haltigen Monomeren ausgewählt aus Hydroxyethylmethacrylat und Hydroxypopylmethacrylat in Gegenwart mindestens einer Kautschukkomponente erhalten werden. Als Kautschuke können dabei alle Polymerisate mit einer Glasübergangstemperatur ≤0°C verwendet werden. Beispiele für derartige Verbindungen sind Polybutadien, Butadien/Styrol-Copolymerisate, Butadien/Acrylnitril-Copolymerisate, Polyisopren, EPM-Kautschuke (Ethylen/Propylen-Kautschuke), EPDM-Kautschuke (Ethylen/Propylen/Dien-Kautschuke, die als Dien ein nichtkonjugiertes Dien wie z.B. Hexadien-1,5 oder Norbornadien in kleinen Mengen enthalten) und Acrylatkautschuke auf der Basis von $C_1$-$C_8$-Alkylacrylaten, insbesondere Ethyl-, Butyl-, Ethylhexylacrylat.

Bevorzugte Kautschuke zur Herstellung der Pfropfpolymerisate A) sind Dien- und Alkylacrylatkautschuke, besonders bevorzugt ist Polybutadien.

Die Kautschuke liegen im Pfropfpolymerisat A) in Form wenigstens partiell vernetzter Teilchen eines mittleren Durchmessers $d_{50}$ von 0,05 bis 20,0 μm, bevorzugt von 0,1 bis 2,0 μm und besonders bevorzugt 0,1 bis 0,8 μm vor. Mittlerer Teilchendurchmesser bezeichnet den $d_{50}$-Wert, ermittelt durch Ultrazentrifugenmessungen nach W. Scholtan et al., Kolloid-Z. u Z. Polymere 250, (1972), 782-796.

Als Styrolderivate werden dabei vorzugsweise unsubstituiertes Styrol, kernsubstituierte Styrole (wie z.B. p-Methylstyrol) und α-Methylstyrol eingesetzt. Zusätzlich kann das Pfropfkautschukpulver A) weitere halogenfreie Monomere in geringer Menge (maximal 10 Gew.-%) eingebaut enthalten.

Beispiele für solche Monomere sind Vinylacetat und Ester der Acrylsäure oder der Methacrylsäure mit 1 bis 8 C-Atomen in der Alkoholkomponente (z.B. Butylacrylat, 2-Ethylhexylacrylat).

Die Pfropfpolymerisate A) sind bekannt; sie werden durch radikalische Pfropfpolymerisation der genannten Monomeren b), c) und d) in Gegenwart des zu bepfropfenden Kautschuks a) hergestellt.

Bevorzugte Herstellungsverfahren für die Pfropfkautschuke A) sind Emulsions-, Lösungs-, Masse oder Suspensionspolymerisation sowie an sich bekannte Kombinationen dieser Verfahren.

Besonders bevorzugte Pfropfkautschuke A) sind solche vom ABS-Typ.

Beispiele für Thermoplastharze B) sind Styrol/Acrylnitril/Hydroxyethylmethacrylat-Polymerisate, Styrol/Methylmethacrylat/Hydroxyethylmethacrylat-Polymerisate, α-Methylstyrol/Acrylnitril/Hydroxyethylmethacrylat-Polymerisate, Styrol/Acrylnitril/Hydroxypropylmethacrylat-Polymerisate. Die Herstellung der Polymerisate kann nach allen gängigen Polymerisationsverfahren (z.B. Lösungspolymerisation, Massepolymerisation, Emulsionspolymerisation, Suspensionspolymerisation) erfolgen; hierbei können bei Bedarf Molekulargewichtsregler (z.B. Mercaptane, dimeres α-Methylstyrol) eingesetzt werden.

Die Molekulargewichte der Polymerisate B) können in weiten Grenzen variiert werden, vorzugsweise werden Produkte mit gewichtsmittleren Molekulargewichten ($\overline{M}_w$) von ca. 40 000 bis 150 000, besonders bevorzugt von ca. 50 000 bis 120 000 eingesetzt.

Als Komponente C) wird in den erfindungsgemäßen Formmassen Ammoniumpolyphosphat eingesetzt. Üblicherweise wird Ammoniumpolyphosphat mit einem genügend hohen Molekulargewicht verwendet (>4000), so daß eine möglichst geringe Wasserlöslichkeit sichergestellt ist. Vorzugsweise liegen die Molekulargewichte ($\overline{M}_w$) zwischen 5 000 und 50 000, besonders bevorzugt zwischen 6 000 und 40 000.

Weiterhin müssen die erfindungsgemäßen Formmassen mindestens eine heterocyclische Verbindung mit mindestens zwei Stickstoffatomen im Heterocyclus (Komponente D) enthalten. Bevorzugte Beispiele für derartige Verbindungen sind Triazinderivate wie z.B. Melamin, Melaminsalze, Cyanurate.

Außerdem können die erfindungsgemäßen Formmassen zusätzliche halogenfreie Polymerkomponenten (Komponente E) enthalten, bei deren Herstellung kein Hydroxyethylmethacrylat bzw. Hydroxypropylmethacrylat verwendet wurde.

Beispiele für solche Polymerkomponenten sind Pfropfkautschuke vom ABS-Typ (hergestellt durch Copolymerisation von Styrol/Acrylnitril-Gemischen in Gegenwart von Polybutadien), vom MBS-Typ (hergestellt durch Copolymerisation von Methylmethacrylat/Styrol-Gemischen in Gegenwart von Polybutadien), vom AES-Typ (hergestellt durch Copolymerisation von Styrol/Acrylnitril-Gemischen in Gegenwart von EPDM-Kautschuk), vom ASA-Typ (hergestellt durch Copolymerisation von Styrol/Acrylnitril-Gemischen in Gegenwart von Acrylat-Kautschuk); Kautschuke wie z.B. Ethylen/Vinylacetat-Copolymere -Copolymere oder Nitrilkautschuke (Copolymerisate aus Butadien und Acrylnitril, insbesondere solche Produkte, die zusätzlich durch eingebaute Säuregruppen modifiziert sind); Harzkomponenten wie z.B. Vinylpolymerharze (z.B. Styrol/Acrylnitril-Copolymerisate, Polymethylmethacrylat, α-Methylstyrol/Acrylnitril-Copolymerisate, Methylmethacrylat/Acrylnitril-Copolymerisate, Methylmethacrylat/Styrol-Copolymerisate) oder Polykondensate (z.B. Bisphenol A-Polycarbonate, Polyethylenterephthalate, Polybutylenterephthalate, Polyamide).

Die erfindungsgemäßen Mischungen, enthaltend die Komponenten A), B), C), D), gegebenenfalls E) und gegebenenfalls die üblichen Zusatzstoffe wie Gleitmittel, Stabilisatoren, Pigmente, Entformungsmittel, Antistatika, Füllstoffe wie z.B. Glasfasern, werden hergestellt, indem man die Bestandteile in bekannter Weise simultan oder sukzessive bei Raumtemperatur oder bei höherer Temperatur vermischt und danach bei 150°C bis 300°C in gebräuchlichen Aggregaten wie Innenknetern, Extrudern oder Doppelwellenschnecken schmelzcompoundiert oder schmelzextrudiert.

Die erfindungsgemäßen Formmassen können zur Herstellung von Formkörpern jeder Art verwendet werden, wobei übliche Verarbeitungsverfahren, z.B. Spritzguß oder Extrusion, verwendet werden können.

## Beispiele

Eingesetzte Komponenten:

Pfropfkautschukkomponente A)

A:   Pfropfkautschuk hergestellt durch Emulsionspolymerisation einer Monomerenmischung aus 47,45 Gew.-Teilen Styrol, 17,55 Gew.-Teilen Acrylnitril und 15 Gew.-Teilen Hydroxyethylmethacrylat in Gegenwart von 20 Gew.-Teilen Polybutadien (in Form eines wäßrigen Latex, mittlerer Teilchendurchmesser ca. 0,4 μm).

Thermoplastkomponente B)

B:   Polymerisat hergestellt durch Emulsionspolymerisation einer Monomerenmischung aus 63,75 Gew.-Teilen Styrol, 21,25 Gew.-Teilen Acrylnitril und 15 Gew.-Teilen Hydroxyethylmethacrylat [1]L-Wert = 91

C:   Ammoniumpolyphosphat: Budit 365 der Firma Chemische Fabrik Budenheim

D:   Melamincyanurat der Firma 3V Sigma

V1:   Triphenylphosphat Disflamoll TP der Firma Bayer AG

V2:   Pfropfkautschuk hergestellt durch Emulsionspolymerisation einer Monomerenmischung aus 58,4 Gew.-Teilen Styrol und 21,6 Gew.-Teilen Acrylnitril Gegenwart von 20 Gew.-Teilen Polybutadien (in Form eines wäßrigen Latex, mittlerer Teilchendurchmesser ca. 0,4 μm).

Die Komponenten wurden in den in Tabelle 1 angegebenen Gewichtsanteilen in einem Kneter vermischt. Die Prüfungen erfolgten an bei 200-220°C gepreßten Probekörpern.

Folgende Werte wurden ermittelt:

Brandverhalten nach UL-Vorschrift an vertikal eingespannten 3,2 mm-Teststäben,

Schlagzähigkeit $a_n$ nach DIN 53 456 in kJ/m$^2$,

Härte nach Shore D(DIN 53 505).

Die Meßwerte sind in Tabelle 2 zusammengestellt.

Daraus ist ersichtlich, daß nur die erfindungsgemäßen Formmassen eine günstige Kombination aus guter Flammwidrigkeit sowie guten Zähigkeits- und Härtewerten aufweisen.

Tabelle 1

| Zusammensetzungen der geprüften Formmassen | | | | | | |
|---|---|---|---|---|---|---|
| Beispiel | A (Gew.-Teile) | B (Gew.-Teile) | C (Gew.-Teile) | D (Gew.-Teile | V1 (Gew.-Teile) | V2 (Gew.-Teile) |
| 1 | 65 | -- | 25 | 10 | -- | -- |
| 2 | 70 | -- | 20 | 10 | -- | -- |
| 3 | 65 | 10 | 17,5 | 7,5 | -- | -- |
| 4 | 32,5 | 32,5 | 25 | 10 | -- | -- |
| 5 (Vergleich) | -- | -- | -- | 10 | 25 | 65 |
| 6 (Vergleich) | -- | -- | 25 | 10 | -- | 65 |

L-Wert = η spez./c bei c=5 g/l in DMF bei 25°C

Tabelle 2

| Daten der geprüften Formmassen | | | |
|---|---|---|---|
| Beispiel | Brandverhalten UL 94 | $a_n$ kJ/m$^2$ | Shore D |
| 1 | V0 | 10 | 80 |
| 2 | V1 | 12 | 80 |
| 3 | V1 | 13 | 80 |
| 4 | V0 | 10 | 83 |
| 5 (Vergleich) | nicht bestanden | 20 | 68 |
| 6 (Vergleich) | nicht bestanden | 11 | 78 |

**Patentansprüche**

1. Flammgeschützte thermoplastische kautschukhaltige Formmassen bestehend aus

   A) 20 bis 100 Gew.-Teilen eines oder mehrerer halogenfreier Pfropfkautschukpolymerer aus

      a) 1 bis 50 Gew.-% eines Kautschuks, in dessen Gegenwart ein Gemisch aus

      b) 5 bis 80 Gew.-% Styrol und/oder einem Styrolderivat,

      c) 5 bis 40 Gew.-% mindestens eines Monomeren ausgewählt aus Acrylnitril, Methacrylnitril, Methylmethacrylat, Maleinsäureanhydrid, N-Phenylmaleinimid,

      d) 5 bis 30 Gew.-% Hydroxyethylmethacrylat polymerisiert wurde,

   B) 0 bis 70 Gew.-Teilen eines oder mehrerer halogenfreier thermoplastischer Ter- oder Multipolymerisate aus

      e) 10 bis 90 Gew.-% Styrol und/oder einem Styrolderivat,

      f) 5 bis 50 Gew.-% mindestens eines Monomeren ausgewählt aus Acrylnitril, Methacrylnitril, Methylmethacrylat, Maleinsäureanhydrid, N-Phenylmaleinimid,

      g) 5 bis 40 Gew.-% Hydroxyethylmethacrylat und/oder Hydroxypropylmethacrylat,

   C) 5 bis 50 Gew.-Teilen Ammoniumpolyphosphat,

   D) 1 bis zu 20 Gew.-Teilen mindestens einer heterocyclischen stickstoffhaltigen Verbindung mit mindestens zwei Stickstoffatomen im Heterocyclus und gegebenenfalls

   E) bis zu 50 Gew.-Teilen mindestens einer weiteren hydroxylgruppenfreien Polymerkomponente.

2. Flammgeschützte thermoplastische kautschukhaltige Formmassen gemäß Anspruch 1 bestehend aus

   A) 25 bis 90 Gew.-Teilen eines oder mehrerer halogenfreier Pfropfkautschukpolymerer aus

      a) 5 bis 40 Gew.-% eines Kautschuks, in dessen Gegenwart ein Gemisch aus

      b) 10 bis 70 Gew.-% Styrol und/oder einem Styrolderivat,

      c) 10 bis 30 Gew.-% mindestens eines Monomeren ausgewählt aus Acrylnitril, Methacrylnitril, Methylmethacrylat, Maleinsäureanhydrid, N-Phenylmaleinimid,

d) 10 bis 25 Gew.-% Hydroxyethylmethacrylat und/oder Hydroxypropylmethacrylat polymerisiert wurde,

B) 15 bis 60 Gew.-Teilen eines oder mehrerer halogenfreier thermoplastischer Ter- oder Multipolymerisate aus

e) 20 bis 80 Gew.-%, Styrol und/ oder einem Styrolderivat,

f) 10 bis 40 Gew.-% mindestens eines Monomeren ausgewählt aus Acrylnitril, Methacrylnitril, Methylmethacrylat, Maleinsäureanhydrid, N-Phenylmaleinimid,

g) 10 bis 35 Gew.-% Hydroxyethylmethacrylat und/oder Hydroxypropylmethacrylat,

C) 10 bis 40 Gew.-Teilen Ammoniumpolyphosphat,

D) 2 bis 15 Gew.-Teilen mindestens einer heterocyclischen stickstoffhaltigen Verbindung mit mindestens zwei Stickstoffatomen im Heterocyclus und gegebenenfalls

E) bis zu 40 Gew.-Teilen mindestens einer weiteren hydroxylgruppenfreien Polymerkomponente.

3. Verwendung der Formmassen gemäß Ansprüchen 1 und 2 zur Herstellung von Formteilen.

## Claims

1. Flame retardant thermoplastic moulding compositions containing rubber and consisting of

A) 20 to 100 parts by weight of one of more halogen-free rubber graft polymers prepared from

a) 1 to 50 wt.% of a rubber, in the presence of which a mixture of

b) 5 to 80 wt.% of styrene and/or a styrene derivative,

c) 5 to 40 wt.% of at least one monomer selected from acrylonitrile, methacrylonitrile, methyl methacrylate, maleic anhydride, N-phenylmaleimide,

d) 5 to 30 wt.% of hydroxyethyl methacrylate has been polymerised,

B) 0 to 70 parts by weight of one or more halogen-free thermoplastic ter- or multipolymers prepared from

e) 10 to 90 wt.% of styrene and/or a styrene derivative,

f) 5 to 50 wt.% of at least one monomer selected from acrylonitrile, methacrylonitrile, methyl methacrylate, maleic anhydride, N-phenylmaleimide,

g) 5 to 40 wt.% of hydroxyethyl methacrylate and/or hydroxypropyl methacrylate,

C) 5 to 50 parts by weight of ammonium polyphosphate,

D) 1 to 20 parts by weight of at least one heterocyclic compound containing nitrogen with at least two nitrogen atoms in the heterocycle and optionally

E) up to 50 parts by weight of at least one further polymer component containing no hydroxyl groups.

2. Flame retardant thermoplastic moulding compositions containing rubber according to claim 1 and consisting of

A) 25 to 90 parts by weight of one of more halogen-free rubber graft polymers prepared from

a) 5 to 40 wt.% of a rubber, in the presence of which a mixture of

b) 10 to 70 wt.% of styrene and/or a styrene derivative,

c) 10 to 30 wt.% of at least one monomer selected from acrylonitrile, methacrylonitrile, methyl methacrylate, maleic anhydride, N-phenylmaleimide,

d) 10 to 25 wt.% of hydroxyethyl methacrylate and/or hydroxypropyl methacrylate has been polymerised,

B) 15 to 60 parts by weight of one or more halogenfree thermoplastic ter- or multipolymers prepared from

e) 20 to 80 wt.% of styrene and/or a styrene derivative,

f) 10 to 40 wt.% of at least one monomer selected from acrylonitrile, methacrylonitrile, methyl methacrylate, maleic anhydride, N-phenylmaleimide,

g) 10 to 35 wt.% of hydroxyethyl methacrylate and/or hydroxypropyl methacrylate,

C) 10 to 40 parts by weight of ammonium polyphosphate,

D) 2 to 15 parts by weight of at least one heterocyclic compound containing nitrogen with at least two nitrogen atoms in the heterocycle and optionally

E) up to 40 parts by weight of at least one further polymer component containing no hydroxyl groups.

3. Use of the moulding compositions according to claims 1 and 2 for the production of mouldings.


**Revendications**

1. Masses de moulage ignifugées, thermoplastiques et contenant du caoutchouc, consistant en :

A) 20 à 100 parties en poids, d'un ou plusieurs polymères de caoutchouc greffé, exempts d'halogène, constitués de :

a) 1 à 50% en poids d'un caoutchouc, en présence duquel a été polymérisé un mélange de
b) 5 à 80% en poids de styrène et/ou d'un dérivé du styrène, et de
c) 5 à 40% en poids d'au moins un monomère choisi parmi l'acrylonitrile, le méthacrylonitrile, le méthacrylate de méthyle, l'anhydride maléique, le N-phénylmaléimide,
d) 5 à 30% en poids de méthacrylate d'hydroxyéthyle,

B) 0 à 70 parties en poids d'un ou plusieurs ter- ou multipolymères thermoplastiques, exempts d'halogène, constitués de :

e) 10 à 90% en poids de styrène et/ou d'un dérivé du styrène,
f) 5 à 50% en poids d'au moins un monomère choisi parmi l'acrylonitrile, le méthacrylonitrile, le méthacrylate de méthyle, l'anhydride maléique, le N-phénylmaléimide,
g) 5 à 40% en poids de méthacrylate d'hydroxyéthyle et/ou de méthacrylate d'hydroxypropyle,

C) 5 à 50 parties en poids de polyphosphate d'ammonium,
D) 1 à 20 parties en poids d'au moins un composé azoté hétérocyclique ayant au moins deux atomes d'azote dans l'hétérocycle et, facultativement
E) jusqu'à 50 parties en poids d'au moins un autre composant polymérique exempt de radicaux hydroxyle.

2. Masses de moulage ignifugées, thermoplastiques et contenant du caoutchouc, suivant la revendication 1, consistant en :

A) 25 à 90 parties en poids, d'un ou plusieurs polymères de caoutchouc greffé, exempts d'halogène, constitués de :

a) 5 à 40% en poids d'un caoutchouc, en présence duquel a été polymérisé un mélange de
b) 10 à 70% en poids de styrène et/ou d'un dérivé du styrène, et de
c) 10 à 30% en poids d'au moins un monomère choisi parmi l'acrylonitrile, le méthacrylonitrile, le méthacrylate de méthyle, l'anhydride maléique, le N-phénylmaléimide,
d) 10 à 25% en poids de méthacrylate d'hydroxyéthyle et/ou de méthacrylate d'hydroxypropyle sont polymérisés,

B) 15 à 60 parties en poids d'un ou plusieurs ter- ou multipolymères thermoplastiques, exempts d'halogène, constitués de :

e) 20 à 80% en poids de styrène et/ou d'un dérivé du styrène,
f) 10 à 40% en poids d'au moins un monomère choisi parmi l'acrylonitrile, le méthacrylonitrile, le méthacrylate de méthyle, l'anhydride maléique, le N-phénylmaléimide,
g) 10 à 35% en poids de méthacrylate d'hydroxyéthyle et/ou de méthacrylate d'hydroxypropyle,

C) 10 à 40 parties en poids de polyphosphate d'ammonium,
D) 2 à 15 parties en poids d'au moins un composé azoté hétérocyclique ayant au moins deux atomes d'azote dans l'hétérocycle et, facultativement
E) jusqu'à 40 parties en poids d'au moins un autre composant polymérique exempt de radicaux hydroxyle.

3. Utilisation des masses de moulage suivant les revendications 1 et 2, pour la préparation d'articles moulés.